(19) Europäisches Patentamt
European Patent Office
Office européen des brevets

(11) **EP 3 899 439 B1**

(12) **EUROPÄISCHE PATENTSCHRIFT**

(45) Veröffentlichungstag und Bekanntmachung des Hinweises auf die Patenterteilung:
**28.06.2023 Patentblatt 2023/26**

(21) Anmeldenummer: **19805224.3**

(22) Anmeldetag: **13.11.2019**

(51) Internationale Patentklassifikation (IPC):
***G01F 1/58*** (2006.01)

(52) Gemeinsame Patentklassifikation (CPC):
**G01F 1/588**

(86) Internationale Anmeldenummer:
**PCT/EP2019/081219**

(87) Internationale Veröffentlichungsnummer:
**WO 2020/126241 (25.06.2020 Gazette 2020/26)**

(54) **VERFAHREN ZUR AUSLEGUNG EINES MAGNETISCH-INDUKTIVEN DURCHFLUSSMESSGERÄTES**

METHOD OF DIMENSIONING A MAGNETIC-INDUCTIVE FLOWMETER

PROCÉDÉ DE DIMENSIONNEMENT D'UN DÉBITMÈTRE MAGNÉTIQUE-INDUCTIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2018 DE 102018132935**

(43) Veröffentlichungstag der Anmeldung:
**27.10.2021 Patentblatt 2021/43**

(73) Patentinhaber: **Endress + Hauser Flowtec AG**
**4153 Reinach (CH)**

(72) Erfinder: **MARIAGER, Simon**
**4059 Basel (CH)**

(74) Vertreter: **Penner, Paul**
**Endress + Hauser Group Services (Deutschland) AG+Co. KG**
**PatServe**
**Colmarer Straße 6**
**79576 Weil am Rhein (DE)**

(56) Entgegenhaltungen:
**EP-A1- 0 878 694       WO-A1-2017/025314**
**WO-A2-2004/031699    DE-A1-102011 079 352**
**DE-A1-102014 119 451   JP-A- H08 247 812**

## Beschreibung

Magnetisch-induktive Durchflussmessgeräte werden zur Bestimmung der Durchflussgeschwindigkeit und/oder des Volumendurchflusses eines Mediums in einem Messrohr eingesetzt. Ein magnetisch-induktives Durchflussmessgerät umfasst eine magnetfelderzeugende Vorrichtung, die ein Magnetfeld senkrecht zur Querachse des Messrohres erzeugt. Dafür werden üblicherweise einzelne oder mehrere Spulen verwendet. Um ein überwiegend homogenes Magnetfeld zu realisieren, werden zusätzlich Sattelspulen oder Polschuhe so geformt und angebracht, dass die Magnetfeldlinien über den gesamten Rohrquerschnitt im Wesentlichen senkrecht zur Querachse verlaufen. Ein an die Mantelfläche des Messrohres angebrachtes Elektrodenpaar greift eine induktiv erzeugte elektrische Messspannung ab, die entsteht, wenn ein leitfähiges Medium bei angelegtem Magnetfeld in Richtung der Längsachse fließt. Da die abgegriffene Messspannung laut Faraday'schem Induktionsgesetz von der Geschwindigkeit des fließenden Mediums abhängt, kann aus der Messspannung die Durchflussgeschwindigkeit und, mit Hinzunahme einer bekannten Rohrquerschnittsfläche, der Volumendurchfluss des Mediums ermittelt werden.

Magnetisch-induktive Durchflussmessgeräte sind empfindlich gegenüber dem Strömungsprofil des fließenden Mediums. Abhängig vom Rohrsystem und Messgerät können Messfehler von mehreren Prozent auftreten. Üblicherweise wird daher ein Geradrohr, dessen Länge mindestens das Fünf- bis Zehnfache der Nennweite des Messrohres entspricht, an die einlaufseitige Stirnfläche eingebaut. Es sind allerdings Anwendungen bekannt, in welchen dieser Mindestabstand, die sogenannte Einlaufstrecke, nicht eingehalten werden kann. Das ist zum Beispiel dann der Fall, wenn sich ein Rohrsystem auf engstem Raum befindet.

Die Empfindlichkeit der Durchflussmessung gegenüber einem rotationsunsymmetrischen Strömungsprofil hängt von der Geometrie des Messrohres, des Magnetsystems und der Elektroden ab. Daher müssen die Einflüsse der Rohr- und Elektrodengeometrie für die korrekte Beschreibung der geschwindigkeitsabhängigen Induktionsspannung berücksichtigt werden. Die beiden genannten Einflüsse werden mathematisch durch eine Gewichtsfunktion *GF* beschrieben.

Der Einfluss der Geometrie auf den Durchfluss lässt sich am besten an folgendem Zusammenhang verdeutlichen:

$$U(x) = \int\limits_V v(x')\, GF(x',x)\, dV$$

wobei für die Bestimmung der Spannung *U(x)*, die Strömungsgeschwindigkeit *v(x')* und die Gewichtsfunktion *GF(x',x)* über das Volumen des Messrohres integriert werden. Dabei wird die Gewichtsfunktion *GF* anhand

$GF(x',x) = B \times \nabla G(X',X)$, mit dem Magnetfeld *B(x')* und einer Green'schen Funktion *G*, die durch die elektrischen Randbedingungen gegeben ist, beschrieben. Das Ziel eines Optimierungsverfahrens ist es nun die Geometrie des Aufbaus dahingehend zu optimieren, dass im gesamten Strömungsprofil $\nabla \times GF = 0$ gilt. Dies ist jedoch für ein Rohr mit einem einzelnen punktförmigen Elektrodenpaar nicht möglich. Einen möglichen Lösungsansatz liefert die Verwendung von zusätzlichen Elektroden.

So ist beispielsweise aus der CN 101294832 A ein magnetisch-induktives Durchflussmessgerät bekannt, das zwei Elektrodenpaare aufweist, die achsensymmetrisch in einem Rohrquerschnitt angeordnet sind, um somit den Einfluss des Strömungsprofils auf die Bestimmung des Volumendurchflusses zu minimieren. Die beiden durch die jeweiligen Elektrodenpaare definierten Elektrodenachsen spannen dabei in dem Querschnitt des Messrohres einen Winkel von ca. 40° auf.

Eine weitere Ausführung wird in DE 102015113390 A1 gezeigt, in der ein zweites und drittes Elektrodenpaar auf definierten Elektrodenachsen angeordnet sind, die um einen Winkelmaß von kleiner gleich ±45° gegenüber einer zum Magnetfeld senkrecht orientierten ersten Elektrodenachse arrangiert sind.

Die EP 0878694 A1 offenbart ebenfalls ein magnetisch-induktives Durchflussmessgerät, das, ausgehend vom Stand der Technik, durch die Verwendung von zwei zusätzlichen Elektrodenpaaren, deren Elektrodenachsen jeweils einen Winkel von ca. 45° zu der Elektrodenachse des herkömmlichen Elektrodenpaares zur Messrohrachse aufspannen, eine Verbesserung der Messgenauigkeit im Bereich von Messfehlern unter 1% realisiert. Dies wird insbesondere dadurch erreicht, dass die an den Elektroden anliegenden Potentialdifferenzen einzeln erfasst und gewichtet werden.

Diesen Ausgestaltungen nachteilig ist, dass für jedes Elektrodenpaar ein Gewichtungsfaktor berücksichtigt werden muss, wobei nicht von vornherein klar ist, wie dieser in Abhängigkeit des Rohrsystems bzw. des rotationsunsymmetrischen Strömungsprofils gewählt werden muss.

WO 2004/031699 A2 offenbart einen weiteren Ansatz um den Einfluss von Strömungsasymmetrien auf die Durchflussmessung zu reduzieren. Dafür wird das Magnetsystem derart ausgelegt, dass es ein Magnetfeld erzeugt, welches eine konkave Verteilung der effektiven Magnetfeldintensität ausgehend von der Magnetsystem selbst bis hin zu den Messelektroden aufweist.

Ausgehend von dem dargelegten Stand der Technik liegt der vorliegenden Erfindung die Aufgabe zugrunde, ein Verfahren zur Auslegung eines magnetisch-induktiven Durchflussmessgerätes und ein magnetisch-induktives Durchflussmessgerät bereitzustellen, mit dem die Einflüsse eines rotationsunsymmetrischen Strömungsprofils bei der Bestimmung der Durchflussgeschwindigkeit und des Volumendurchflusses minimiert werden können.

Die Aufgabe wird gelöst durch das Verfahren nach Anspruch 1.

Das erfindungsgemäße Verfahren zum Auslegen eines magnetisch-induktiven Durchflussmessgerätes zur Messung einer Durchflussgeschwindigkeit u oder eines Volumendurchflusses V eines Mediums, wobei das magnetisch-induktive Durchflussmessgerät umfasst:

- ein Messrohr (1) mit erstem Querschnitt, zum Führen des Mediums in eine durch eine Messrohrachse definierte Längsrichtung (4),

  ∘ wobei das Messrohr eine einlaufseitige Stirnfläche (2) und eine auslaufseitige Stirnfläche (3) aufweist, welche das Messrohr (1) in Längsrichtung (4) abgrenzen,
  ∘ wobei das Messrohr ein Mittelsegment (29) zwischen einlaufseitiger und auslaufseitiger Stirnfläche (2, 3) aufweist, welches einen zweiten Querschnitt aufweist, wobei die erste Querschnittsfläche größer als die zweite Querschnittsfläche ist,
  ∘ wobei eine vertikale Längsebene das Messrohr in eine erste Seite und in eine zweite Seite (I, II) einteilt,
  ∘ wobei das Messrohr (1) einen fluidführenden Kanal umfasst, der eine durch einen Liner begrenzende Wandung aufweist;

- mindestens eine magnetfelderzeugende Vorrichtung (5) zum Erzeugen eines im Wesentlichen senkrecht zur Längsrichtung (4) stehenden Magnetfeldes im Medium,

  ∘ wobei die magnetfelderzeugende Vorrichtung (5) einen Polschuh (14) oder eine Sattelspule aufweist,
  ∘ wobei der Polschuh (14) oder die Sattelspule in dem zweiten Querschnitt (9) des Messrohres (1) den fluidführenden Kanal in einem maximalen Mittelpunktswinkel β umgreift; und

- ein Elektrodensystem (6) mit mindestens zwei Elektrodenpaaren, die dazu eingerichtet sind, eine senkrecht zum Magnetfeld und zur Längsrichtung (4) induzierte Spannung zwischen den Elektrodenpaaren zu erfassen;

  ∘ wobei sich jeweils eine erste Elektrode (6.1) des Elektrodenpaares auf der ersten Seite (I) des Messrohres befindet,
  ∘ wobei sich jeweils eine zweite Elektrode (6.2) des Elektrodenpaares auf der zweiten Seite (II) befindet,
  ∘ wobei ein Mittelpunktswinkel $\alpha$ in dem zweiten Querschnitt (9) des Messrohres einen minimalen Kreissektor aufschlägt, in dem sich die auf jeweils einer Seite des Messrohres (1) befindlichen Elektroden (6.1, 6.2) verteilen,

  ∘ wobei die Elektrodenpaare im Mittelsegment angeordnet sind;

umfasst die Verfahrensschritte:

- Abstimmen der Mittelpunktswinkel $\alpha$ und $\beta$ so aufeinander, dass das magnetisch-induktive Durchflussmessgerät in dem Maße unempfindlich gegenüber Abweichungen einer rotationsunsymmetrischen Strömung, dass das magnetisch-induktive Durchflussmessgerät bei einer Testmessung einen Messfehler der Durchflussgeschwindigkeit $\Delta_u = \left|\frac{u_{va}-u_S}{u_{va}}\right|$ und/oder einen Messfehler des Volumendurchflusses $\Delta_{\dot{V}} = \left|\frac{\dot{V}_{va}-\dot{V}_S}{\dot{V}_{va}}\right|$ kleiner 1,0% aufweist, wobei das Abstimmen der Mittelpunktswinkel $\alpha$ und $\beta$ das Durchführen der Testmessung umfasst, umfassend die Verfahrensschritte:

  - Bestimmen der Durchflussgeschwindigkeit $u_{va}$ und/oder ein Volumendurchfluss $\dot{V}_{va}$ im Falle einer Strömung mit voll ausgebildeten Strömungsprofil; und
  - Bestimmen der Durchflussgeschwindigkeit $u_{va}$ und/oder ein Volumendurchfluss $\dot{V}_{va}$ im Falle einer rotationsunsymmetrischen Strömung,

wobei die rotationsunsymmetrischen Strömung durch eine an die einlaufseitige Stirnfläche eingerichtete und mindestens eine Störquelle umfassende Störung erzeugt wird.

Ein magnetisch-induktives Durchflussmessgerät, das unempfindlich gegenüber einem rotationsunsymmetrischen Strömungsprofil ist, bietet sich idealerweise für die Überwachung von Rohrsystemen an, bei denen eine optimale Einlaufstrecke, deren Länge ein Vielfaches der Nennweite des Messrohres entspricht, nicht realisiert werden kann.

Durch Störungen treten, abhängig vom Abstand und Art der Störung, durch ein nichtideales Strömungsprofil des Mediums Messfehler auf, da ein magnetisch-induktives Durchflussmessgerät normalerweise dahingehend optimiert wird, dass ein voll ausgebildetes rotationssymmetrisches Strömungsprofil vorliegt. Als voll ausgebildetes rotationssymmetrisches Strömungsprofil ist dabei das Strömungsprofil zu verstehen, dass sich in Strömungsrichtung nicht mehr ändert. Ein derartiges Strömungsprofil bildet sich beispielsweise in einem Messrohr mit einer Einlaufstrecke, entsprechend der 30-fachen Messrohr-Nennweite, und einer Mediumsgeschwindigkeit von 2 m/s aus.

Im Stand der Technik sind magnetisch-induktive Durchflussmessgeräte mit mindestens zwei Elektrodenpaaren, die einen Winkel $\alpha$ in dem Querschnitt des Messrohres aufschlagen, bereits bekannt. Üblicherweise schlagen benachbarte Elektroden einen Winkel $\delta$ mit

festem Winkelwert von ca. 180°/($N$ + 1) auf, wobei die natürliche Zahl $N$ der Anzahl der Elektrodenpaare entspricht. Mit einer Gewichtung der separat an den Elektroden anfallenden Potentialdifferenzen können so Messfehler von unter 1% für rotations-unsymmetrische Strömungsprofile realisiert werden. Es hat sich als erstaunlich herausgestellt, dass der anfallende Messfehler aufgrund eines rotationsunsymmetrischen Strömungsprofils durch die Modifizierung der Winkel $\alpha$ und $\beta$ weiter deutlich reduziert werden kann.

Der Mittelpunktswinkel $\beta$ dient dabei als Kenngröße für die magnetfelderzeugende Vorrichtung und gibt an inwieweit das Messrohr durch den Polschuh im Querschnitt umgriffen wird. Während ein kleiner Mittelpunktswinkel $\beta$ dafür sorgt, dass die Magnetfeldlinien ausschließlich im Zentrum des Messrohres gebündelt werden, wird durch die Verwendung eines großen Mittelpunktswinkels $\beta$ ein annähernd über den gesamten Querschnitt des Messrohres homogenes Magnetfeld realisiert. Der Mittelpunktswinkel $\beta$ ist dabei durch zwei Geraden gekennzeichnet, die sich im Mittelpunkt des Rohres treffen und die jeweils eines der beiden Enden des Polschuhs schneiden.

Es sind magnetfelderzeugende Vorrichtungen bekannt, die ein Leitblech im Außenbereich und mindestens ein Abschirmelement zwischen einem Polschuh und dem Leitblech und/oder oberhalb des Leitblechs und des Elektromagneten umfassen. Diese Bauteile erfüllen die Aufgabe Stör- oder Streufelder zu reduzieren und/oder den Magnetfeldlinienverlauf zu schließen und sind nicht für das Einkoppeln des Magnetfeldes in das Medium verantwortlich.

Die magnetfelderzeugende Vorrichtung ist außerhalb des Messrohres angeordnet und komplett anliegend, teilweise anliegend oder mit einem festen Abstand zum Messrohr befestigt. Es sind aber auch magnetisch-induktive Durchflussmessgeräte bekannt, die im Liner bzw. in der Wandung vergossene magnetfelderzeugende Vorrichtungen aufweisen. Die Elektroden hingegen sind nicht zwingend eingebettet, sondern können auch nachträglich als Stiftelektroden eingesetzt werden. Allerdings sind in vielen Fällen Elektroden mit Elektrodenköpfen, z.B. sogenannte Pilzkopfelektroden, für den Einsatz in einem magnetisch-induktiven Durchflussmessgerät bevorzugt. Diese können vorteilhaft im Rahmen der vorliegenden Erfindung während der Fertigung bei Ausbildung des Materials der Wandung mitvergossen werden.

Das Messrohr ist auf seiner das Medium berührenden Innenseite elektrisch isolierend ausgebildet, und zwar einerseits z.B. dadurch, dass das Messrohr selbst vollständig aus einem Isolierstoff, insb. aus gesinterter Keramik, bevorzugt aus Aluminiumoxid-Keramik, oder aus einem Kunststoff besteht. Andererseits kann die Isolierung auch dadurch realisiert sein, dass ein nichtferromagnetisches Metallrohr, insb. ein rostfreies Stahlrohr, innen mit einer Isolierschicht aus einem geeigneten Kunststoff, insb. aus Hartgummi, Polyurethan, Weichgummi oder Polyfluorethylen, bevorzugt Polytetrafluorethylen, ausgekleidet ist.

Für die Ermittlung des Referenzwertes wird ein Durchflussmessgerät verwendet, das auf dem Coriolis-Prinzip basiert und eine Messgenauigkeit von 0,1 % aufweist. Dieses ist in einem Rohrsystem eingebaut und dient als Referenzsystem für das erfindungsgemäße magnetisch-induktive Durchflussmessgerät.

Das Mittelsegment des Messrohres weist einen zweiten Querschnitt auf, der eine geringere Querschnittsfläche aufweist als der erste Querschnitt. Die Form des zweiten Querschnittes kann von der Form des ersten Querschnittes abweichen. Der zweite Querschnitt kann kreisförmig, oval, rechteckig, quadratisch oder rechteckig mit abgerundeten Ecken sein. Die Form und die größe des zweiten Querschnittes hängt von der Dicke und Form der Wandung ab.

Vorteilhafte Ausgestaltung der Erfindung sind Gegenstand der Unteransprüche.

Die Testmessung kann auch zur Abstimmung der optimalen Mittelpunktswinkelswinkel $\alpha$ und $\beta$ dienen und wird dann im Voraus durchgeführt, so dass unter Berücksichtigung des Mittelpunktswinkelpaares ($\alpha$, $\beta$) ein strömungsprofilunabhängiges magnetisch-induktives Durchflussmessgerät realisiert wird.

Die Testmessung kann viele verschiedene Störquellen beinhalten, die alle einen beliebigen Einbauwinkel annehmen können. Durch die Verwendung von ausreichend unterschiedlichen Störungen kann der Mittelpunktswinkel $\alpha$ und $\beta$ dahingehend optimiert werden, dass der Messfehler einer speziellen Störung einen Wert kleiner 0,05% und der maximale Messfehler einer beliebigen Störung einen Wert kleiner 0,5% annimmt.

Es hat sich herausgestellt, dass durch die Verwendung von zwei ausreichend unterschiedlichen Störquellen, insbesondere einer Blende und eines 90°Rohrbogens, ein bereits ausreichend gutes Mittelpunktswinkelpaar ($\alpha$, $\beta$) für ein magnetisch-induktives Durchflussmessgerät ermittelt wird, das für eine beliebig andersartige Störung einen maximalen Messfehler von 0,5% aufweist. Durch Einbeziehen weiterer Störquellen in die Testmessung ändern sich die optimierten Parameter nur marginal, wodurch sich der resultierende Messfehler nur geringfügig ändert.

Gemäß einer Ausgestaltung umfasst die Störquelle eine Blende oder einen 90°Rohrbogen, wobei durch die Blende 50% des Querschnitts des Messrohres abgedeckt wird, wobei die Blende eine Kreissehne aufweist, welche die Blende zum Rohr hin begrenzt, wobei die Blende eine erste Blendenorientierung oder eine zweite Blendenorientierung annimmt, wobei bei der ersten Blendenorientierung die Kreissehne senkrecht zum Magnetfeld orientiert ist und bei der zweiten Blendenorientierung die Kreissehne parallel zum Magnetfeld orientiert ist, wobei der 90°Rohrbogen eine erste Rohrbogenorientierung oder eine zweite Rohrbogenorientierung annimmt, wobei sich die erste Rohrbogenorientierung durch eine senkrecht zum Magnetfeld und zur Längsrichtung des Messrohres verlaufende Rohrachse auszeichnet und die zweite Rohrbogenorientierung durch eine parallel zum Magnetfeld und senkrecht zur Längsrichtung des Messrohres verlaufende Rohrachse auszeichnet.

Bislang wird dem Nutzer von magnetisch-induktiven Durchflussmessgeräten eine vorgeschriebene Einlaufstrecke vorgegeben. Diese vorgeschriebene Einlaufstrecke ist notwendig, um den für das Gerät spezifizierten Messfehler einzuhalten. Die auftretenden Messfehler müssen einmalig pro Störungstyp, Abstand, Montagewinkel und evtl. Reynoldszahl ermittelt werden. Dies geschieht entweder durch aufwendige Messreihen oder durch Simulationen der Strömungsverhältnisse bei unterschiedlichen Störungen und Auswertung der berechneten Strömungsprofile. Als Ergebnis dieses Schrittes erhält man Daten, die angeben, wie groß der Messfehler ist, der entstehen würde, wenn ein magnetisch-induktives Durchflussmessgerät in die entsprechende Position eingebaut werden würde und wie groß der Messfehler ist, wenn der Mittelpunktswinkel $\alpha$ des Elektrodensystems oder der Mittelpunktswinkel $\beta$ der magnetfelderzeugenden Vorrichtung angepasst wird.

Gemäß einer Ausgestaltung ist die Störung mit Abstand 0-DN zur einlaufseitigen Stirnfläche (2) eingerichtet ist.

Gemäß einer Ausgestaltung ist eine Unempfindlichkeit gegenüber einem rotationsunsymmetrischen Strömungsprofil bei einer Reynoldszahl des Mediums im Messrohr (1) größer gleich 100.000, insbesondere größer gleich 50.000 und bevorzugt größer gleich 10.000 gegeben.

Gemäß einer Ausgestaltung weist das Durchflussmessgerät zwei oder drei Elektrodenpaare aufweist.

Gemäß einer weiteren Ausgestaltung weist das Durchflussmessgerät zwei oder drei Elektrodenpaare auf. Die Elektrodenpaare müssen dabei nicht notwendigerweise diametral angeordnet sein. Die mindestens zwei Elektrodenpaare sind mit dem Messmedium galvanisch oder kapazitiv gekoppelt.

Gemäß einer Ausgestaltung sind mindestens zwei Elektroden, insbesondere alle auf jeweils einer Seite des Messrohres bezüglich der vertikalen Messrohr-Längsebene befindlichen Elektroden, insbesondere mit einem Stanzbiegeteil kurzgeschlossen.

Der technische Erfolg dieser Ausgestaltung der Erfindung besteht darin, dass gefunden wurde, dass durch das Anpassen der Winkel $\alpha$ und $\beta$ auf eine Abtastung der einzelnen Potentialdifferenzen mit Hinzunahme von empirisch bestimmte Gewichtungsfaktoren verzichtet werden kann und die anliegende Spannung über alle Elektroden im Falle einer Störung weniger als 0,5% von einem anhand eines voll ausgebildeten Strömungsprofils ermittelten Messwertes abweicht. Eine Gewichtung der einzelnen Spannungswerte ist somit nicht notwendig, wodurch die Auswerteeinheit zur Bestimmung der anliegenden Spannung und der daraus resultierenden Strömungsgeschwindigkeit deutlich vereinfacht werden kann. Es reicht nunmehr den gemessenen Spannungswert mittels einer Kalibration in eine Strömungsgeschwindigkeit oder einen Volumendurchfluss umzuwandeln.

Die Elektroden werden insbesondere durch Kabel miteinander kurzgeschlossen und bevorzugt durch ein leitfähiges Blechteil. Das bietet eine einfache und stabile Montage und liefert zusätzlich eine kostengünstige Alternative zu bekannten Lösungen. Die Elektroden sind mit einer Regel- und Auswerteeinheit verbunden, die anhand der in den Elektroden induzierten Spannung Informationen über die Durchflussgeschwindigkeit und den Volumendurchfluss im Messrohr liefert.

Gemäß einer Ausgestaltung gilt für den Mittelpunktswinkel $\alpha$, dass $30° \leq \alpha \leq 60°$ ist und insbesondere, dass $40° \leq \alpha \leq 50°$ ist.

Gemäß einer Ausgestaltung gilt für den Mittelpunktswinkel $\beta$ gilt, dass $50° \leq \beta \leq 90°$ ist und insbesondere, dass $70° \leq \beta \leq 80°$ ist.

Das Abstimmen der Mittelpunktswinkel $\alpha$ und $\beta$ wird mit einem Simulationsprogramm oder anhand eines Testaufbaus durchgeführt.

Gemäß einer Ausgestaltung sind die Elektroden achsensymmetrisch zur vertikalen Messrohr-Längsebene angeordnet.

Gemäß einer Ausgestaltung spannen jeweils zwei auf einer Seite des Messrohres befindlichen, benachbarten Elektroden einen Mittelpunktswinkel $\delta = \alpha/(N - 1)$ in dem Querschnitt des Messrohres auf, wobei eine natürliche Zahl $N$ der Anzahl der Elektrodenpaare entspricht.

Gemäß einer Ausgestaltung gilt für den Mittelpunktswinkel $\alpha$, dass $30° \leq \alpha \leq 60°$ ist und insbesondere, dass $40° \leq \alpha \leq 50°$ ist, wobei für den Mittelpunktswinkel $\beta$ gilt, dass $50° \leq \beta \leq 90°$ ist und insbesondere, dass $70° \leq \beta \leq 80°$ ist.

Das Abstimmen der Mittelpunktswinkel $\alpha$ und $\beta$ wird mit einem Simulationsprogramm oder anhand eines Testaufbaus durchgeführt. Eine Testumgebung wird definiert oder aufgebaut und die Mittelpunkswinkel des Durchflussmessgerätes werden solange angepasst bis der Messfehler für die eingestellten Testumgebungen minimal ist.

Die Testmessung kann auch zur Abstimmung der optimalen Mittelpunktswinkel $\alpha$ und $\beta$ dienen und wird dann im Voraus durchgeführt, so dass unter Berücksichtigung des optimierten Mittelpunktswinkelpaares $\alpha$ und $\beta$ ein strömungsprofilunabhängiges magnetisch-induktives Durchflussmessgerät realisiert wird.

Die Testmessung kann viele verschiedene Störquellen beinhalten, die allesamt einen beliebigen Einbauwinkel annehmen können. Durch die Verwendung von ausreichend unterschiedlicher Störungen können die Mittelpunktswinkel $\alpha$ und $\beta$ dahingehend optimiert werden, dass der Messfehler einer speziellen Störung einen Wert kleiner 0,05% und der maximale Messfehler einer beliebigen Störung einen Wert kleiner 0,5% annimmt.

Es hat sich herausgestellt, dass durch die Verwendung von zwei ausreichend unterschiedlichen Störquellen, insbesondere einer Blende und eines 90°Rohrbogens, ein bereits ausreichend gutes Mittelpunktswinkelpaar ($\alpha, \beta$) für ein magnetisch-induktives Durchflussmessgerät ermittelt werden kann, so dass eine beliebig andersartige Störung zu einem maximalen Messfehler von 0,5% führt. Durch Einbeziehen weiterer Störquellen in die Testmessung ändern sich die optimierten Parameter nur marginal, wodurch sich der resultierende Messfehler nur geringfügig ändert.

Gemäß einer Ausgestaltung weist die Messstelle ein Durchflussmessgerät mit zwei oder drei Elektrodenpaaren auf.

Gemäß einer Ausgestaltungsind mindestens zwei Elektroden, insbesondere alle auf jeweils einer Seite des Messrohres bezüglich der vertikalen Messrohr-Längsebene befindlichen Elektroden kurzgeschlossen.

Gemäß einer Ausgestaltung sind die Elektroden mit einem Stanzbiegeteil kurzgeschlossen sind.

Gemäß einer Ausgestaltung weist das Messrohr einen ersten und einen zweiten Querschnitt auf, wobei das Messrohr ein Mittelsegment zwischen einlaufseitiger und auslaufseitiger Stirnfläche aufweist, welches den zweiten Querschnitt aufweist, wobei die Elektrodenpaare im Mittelsegment angeordnet sind.

Gemäß einer Ausgestaltung umfasst die Störquelle einen 90°Rohrbogen mit beliebiger Rohrbogenorientierung und/oder eine beliebige Blende mit beliebiger Blendenorientierung und/oder ein Ventil und/oder eine Pumpe und/oder ein T-Stück und/oder einen Doppelbogen aus zwei hintereinandergesetzte 90°Rohrbögen.

Gemäß einer Ausgestaltung wird die Störung mit Abstand 0-DN zur einlaufseitigen Stirnfläche eingerichtet.

Die Erfindung wird anhand der nachfolgenden Figuren näher erläutert. Es zeigt:

Fig. 1: eine schematische Darstellung des Querschnittes eines magnetisch-induktiven Durchflussmessgerätes nach dem Stand der Technik;

Fig. 2: eine schematische Darstellung des Längsschnittes eines magnetisch-induktiven Durchflussmessgerätes;

Fig. 3: eine schematische Darstellung des Querschnittes eines erfindungsgemäßen magnetisch-induktiven Durchflussmessgerätes;

Fig. 4: eine schematische Darstellung des Längsschnittes eines erfindungsgemäßen magnetisch-induktiven Durchflussmessgerätes;

Fig. 5: eine schematische Darstellung unterschiedlicher Störquellen und Messstellen mit jeweils einer Störquelle; und

Fig. 6: eine Übersicht des Messfehlers in Abhängigkeit der Mittelpunktswinkel $\alpha$ und $\beta$ für ein 50-DN Messrohr.

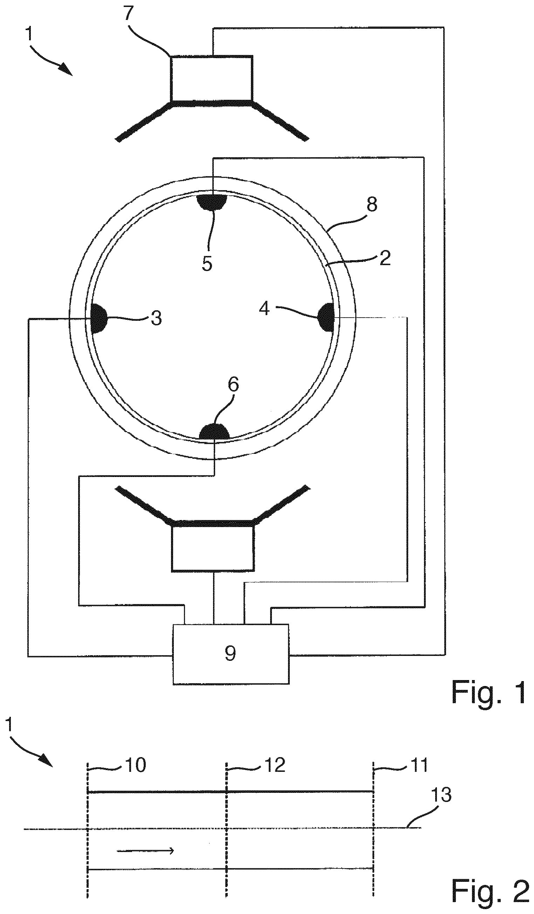

Die Fig. 1 zeigt ein aus dem Stand der Technik bekanntes magnetisch-induktiven Durchflussmessgerätes. Der Aufbau und das Messprinzip eines magnetisch-induktiven Durchflussmessgerätes sind grundsätzlich bekannt. Durch ein Messrohr (1) wird ein Medium geleitet, das eine elektrische Leitfähigkeit aufweist. Eine magnetfelderzeugende Vorrichtung (7) ist so angebracht, dass sich die Magnetfeldlinien senkrecht zu einer durch die Messrohrachse (13) definierten Längsrichtung orientieren. Als magnetfelderzeugende Vorrichtung (7) eignet sich vorzugsweise eine Sattelspule oder ein Polschuh (26) mit aufgesetzter Spule und Spulenkern. Bei angelegtem Magnetfeld entsteht im Messrohr (1) eine durchflussabhängige Potentialverteilung, die mit zwei an der Innenwand des Messrohres (1) angebrachten Elektroden (3, 4) abgegriffen wird. In der Regel sind diese diametral angeordnet und bilden eine Elektrodenachse, die senkrecht zu den Magnetfeldlinien und der Längsachse des Rohres verläuft. Anhand der gemessenen Messspannung kann, unter Berücksichtigung der magnetischen Flussdichte, die Durchflussgeschwindigkeit und, unter Berücksichtigung der Rohrquerschnittsfläche, der Volumendurchfluss des Mediums bestimmt werden. Um das Ableiten der an den Elektroden (3, 4) anliegenden Messspannung über das Rohr (8) zu verhindern, wird die Innenwand mit einem isolierenden Material, beispielsweise einem Kunststoff-Liner (2) ausgekleidet. Das durch eine magnetfelderzeugende Vorrichtung, beispielsweise einen Elektromagneten, aufgebaute Magnetfeld wird durch einen mittels einer Betriebseinheit getakteten Gleichstrom wechselnder Polarität erzeugt. Dies gewährleistet einen stabilen Nullpunkt und macht die Messung unempfindlich gegenüber Einflüssen durch elektrochemische Störungen. Eine Messeinheit liest die an den Elektroden (3, 4) anliegende Spannung aus und gibt die Durchflussgeschwindigkeit und/oder den mittels einer Auswerteeinheit errechneten Volumendurchfluss des Mediums aus. Handelsübliche magnetisch-induktive Durchflussmessgeräte weisen zusätzlich zu den Elektroden (3, 4) zwei weitere Elektroden (5, 6) auf. Zum einen dient eine optimalerweise am höchsten Punkt im Rohr (8) angebrachte Füllstandsüberwachungselektrode (5) dazu, eine Teilbefüllung des Messrohres (1) zu detektieren, diese Information an den Nutzer weiterzuleiten und/oder den Füllstand bei der Ermittlung des Volumendurchflusses zu berücksichtigen. Desweiteren dient eine Bezugselektrode (6), die üblicherweise diametral zur Füllstandsüberwachungselektrode (5) angebracht ist, dazu eine ausreichende Erdung des Mediums zu gewährleisten.

Ein magnetisch-induktives Durchflussmessgerät umfasst eine einlaufseitige Stirnfläche (10) und eine auslaufseitige Stirnfläche (11). In Fig. 2 deutet ein Pfeil die Flussrichtung des Mediums an. Ein an die einlaufseitige Stirnfläche (10) montierter 90°Rohrbogen (90°R) oder eine Blende (B) wirken sich auf das Strömungsprofil des Mediums aus, so dass im Querschnitt (12) des Messrohres (1) ein rotationsunsymmetrisches Strömungsprofil ausbildet.

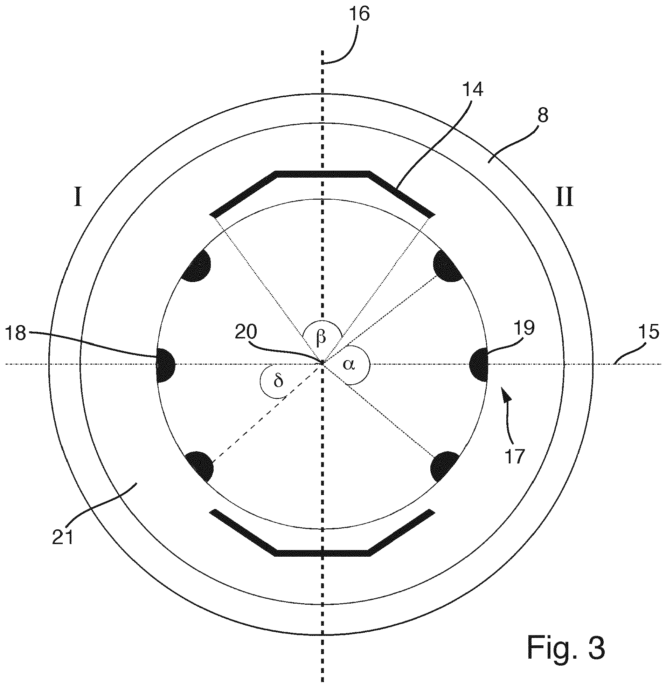

Die Fig. 3 zeigt einen Querschnitt eines Mittelsegmentes des erfindungsgemäßen magnetisch-induktiven Durchflussmessgerätes. Eine magnetfelderzeugende Vorrichtung (7) ist so angebracht, dass sich die Magnetfeldlinien senkrecht zu einer durch die Messrohrachse (13) definierten Längsrichtung orientieren. Als magnetfelderzeugende Vorrichtung (7) eignet sich vorzugsweise eine Sattelspule oder ein Polschuh (14) mit aufgesetzter Spule und Spulenkern. Bei angelegtem Magnetfeld entsteht im Messrohr (1) eine durchflussabhängige Potentialverteilung, die mit einem Elektrodensystem (17) abgegriffen wird. In der Fig. 3 umfasst das Elektrodensystem (17) drei Elektroden die auf einer ersten Seite (I) angebracht sind und drei Elektroden die auf einer zweiten Seite (II) angebracht sind. Eine erste Elektrode (18) der ersten Seite (I) und eine zweite Elektrode (19) der zweiten Seite (II) bilden ein Elektrodenpaar. Anhand der gemessenen Messspannung kann, unter Berücksichtigung der magnetischen Flussdichte, die Durchflussgeschwindigkeit und, unter Berücksichtigung der Rohrquerschnittsfläche, der Volumendurchfluss des Mediums bestimmt werden. Um das Ableiten der an den Elektroden anliegenden Messspannung über das Rohr (8) zu verhindern, wird die Innenwand mit einem isolierenden Material, beispielsweise einem Kunststoff-Liner ausgekleidet. Das durch eine magnetfelderzeugende Vorrichtung, beispielsweise einen Elektromagneten, aufgebaute Magnetfeld wird durch einen mittels einer Betriebseinheit getakteten Gleichstrom wechselnder Polarität erzeugt. Dies gewährleistet einen stabilen Nullpunkt und macht die Messung unempfindlich gegenüber Einflüssen durch elektrochemische Störungen. Eine Messeinheit liest die an dem Elektrodensystem (17) anliegende Spannung aus und gibt die Durchflussgeschwindigkeit und/oder den mittels einer Auswerteeinheit errechneten Volumendurchfluss des Mediums an einer Anzeigeeinheit aus.

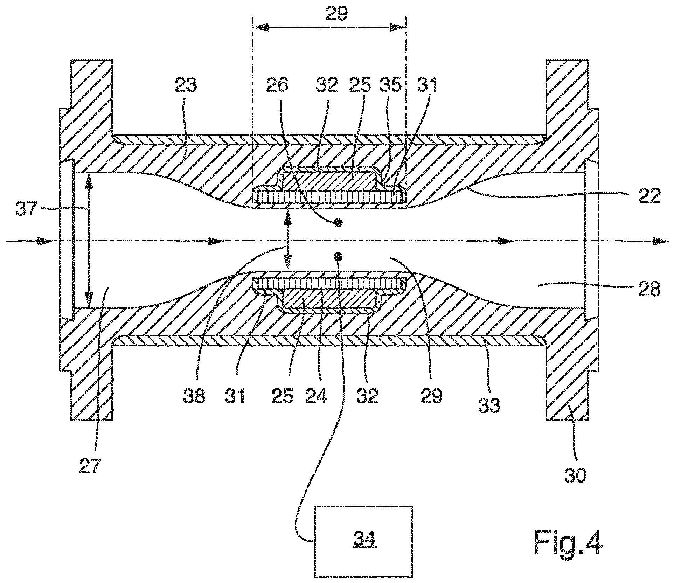

Der Längsschnitt eines erfindungsgemäßen magnetisch-induktiven Durchflussmessgerätes ist in Fig. 4 dargestellt. Das Durchflussmessgerät umfasst einen fluidführenden Kanal (22) mit eingeschürtem Durchmesser. wobei der fluidführende Kanal (22) einen Ein- und Auslaufbereich (27, 28) mit einem ersten Querschnitt (37) aufweist und wobei der fluidführende Kanal (22) ein Mittelsegment (29) zwischen dem Ein- und Auslaufbereich (27, 28) aufweist, welches einen zweiten Querschnitt (38) aufweist, wobei in dem Mittelsegment (29) des fluidführenden Kanals (22) ein Elektrodensystem (26), bestehend aus jeweils zwei auf einer Seite des Messrohres angebrachten Elektroden, angeordnet sind. Fig. 4 zeigt ein Messsystem (24) welches in der Form bereits bekannt ist. Es umfasst u.a. zwei Magnetspulen (25) zur Erzeugung eines Magnetfeldes. Diese liegen sich diametral am Kanal (22) gegenüber. Weiterhin umfasst das Messsystem ein Elektrodensystem (26) aus vier Elektrode zum Abgriff der durch das Magnetsystem induzierten Spannung. Der Kanal (22) wird durch eine Wandung (23) begrenzt. Das besondere an der Konstruktion der Fig. 4 ist, dass die Wandung (23) zugleich auch das Einfassungsmaterial für das Messsystem (24), also die für die magnetfelderzeugende Vorrichtung und das Elektrodensystem (26) ist. Das Messsystem (24) und die magnetfelderzeugende Vorrichtung kann aber auch außerhalb des Rohres angeordnet sein. Konkret ist die kanalbildende Wandung (23) aus einer Vergussmasse gebildet. Die kanalbildende Wandung (23) kann zusätzlich zum Liner (2) in das Messrohr (1) eingebracht bzw. aufgetragen werden oder den Liner (2) umfassen.

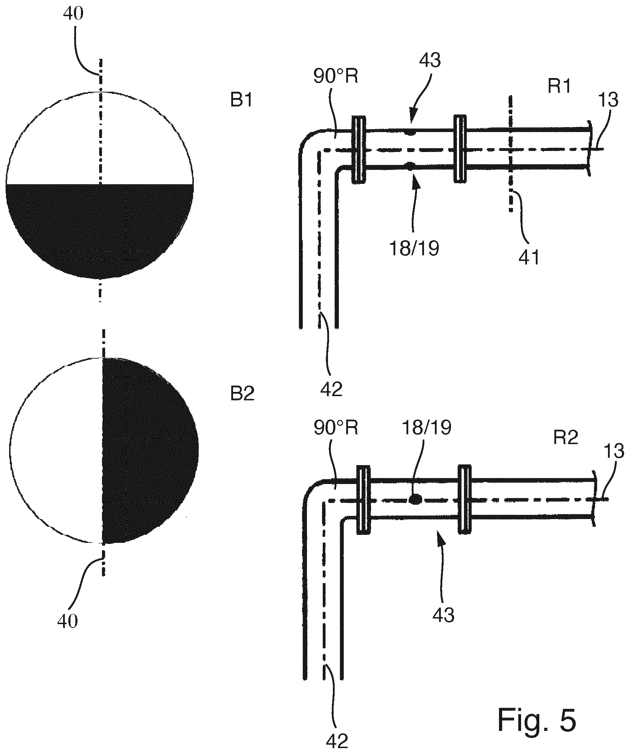

Im ersten Schritt werden die Mittelpunktswinkel $\alpha$ und $\beta$ so angepasst, dass der Messfehler der Durchflussgeschwindigkeit in Testmessungen mit einer einzelnen Störung minimal wird. Dabei wird die Störung durch eine Blende oder einen 90°Rohrbogen (90°R) (siehe Fig. 5) generiert. Die Blende deckt dabei 50% des Rohrquerschnitts (12) ab und weist eine Kreissehne auf, welche die Blende zum Rohr hin begrenzt. Sie nimmt eine erste Blendenorientierung (B1) oder eine zweite Blendenorientierung (B2) an, die insbesondere um 90° zueinander verdreht sind. Dabei ist die Kreissehne bei der ersten Blendenorientierung (B1) senkrecht zum Magnetfeld bzw. zur vertikalen Längsebene (40) und bei der zweiten Blendenorientierung (B2) parallel zum Magnetfeld bzw. zur vertikalen Längsebene (40) orientiert. Die erste Blendenorientierung (B1) und die zweite Blendenorientierung (B2) einer Blende ist schematisch in Fig. 5 dargestellt. Das schwarz gefüllte Kreissegment stellt dabei die Fläche dar, die einen Teil der Querschnittsfläche des Messrohres blockiert. In der Testmessung ist die Blende (B) mit einem Abstand von 0-DN zur einlaufseitigen Stirnfläche (10) angebracht. Alternativ wird ein 90°Rohrbogen (90°R) eingangs zur einlaufseitigen Stirnfläche (10) in einem Abstand von 0-DN angebracht, wobei der 90°Rohrbogen (90°R) eine erste Rohrbogenorientierung (R1) oder eine zweite Rohrbogenorientierung (R2) annimmt, die insbesondere um 90° zueinander verdreht sind. Die erste Rohrbogenorientierung (R1) und die zweite Rohrbogenorientierung (R2) eines 90°Rohrbogens (90°R) ist schematisch in Fig. 5 dargestellt. Bei der ersten Rohrbogenorientierung (R1) verläuft die Rohrachse (42) parallel zur Abszissenachse (41) des Durchflussmessgerätes. Die Anpassung der Mittelpunktswinkel $\alpha$ und $\beta$ wird vorzugsweise für die beiden Störungen mit beiden Orientierungen durchgeführt.

Im zweiten Schritt wird das Mittelpunktswinkelpaar bestimmt, dessen maximaler Messfehler für alle durchgeführten Testmessungen minimal ist.

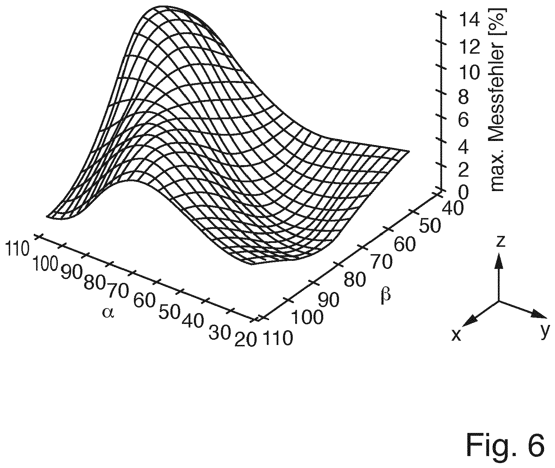

In Fig. 6 ist beispielhaft der simulierte Messfehler (Z-Achse) für ein 50-DN Mittelsegment in Abhängigkeit vom Mittelpunktswinkel $\alpha$ (Y-Achse) und vom Mittelpunktswinkel $\beta$ (X-Achse) aufgetragen. Anhand des Verlaufes wird das Minimum des Messfehlers für eine spezifische Störung, hier ein Rohrbogen (90°R) optimiert bzgl. einer ersten und zweiten Rohrbogenorientierung (R1, R2), ermittelt. Dabei zeichnet sich die erste Rohrbogenorientierung (R1) durch eine senkrecht zum Magnetfeld und zur Längsrichtung verlaufende Messrohrachse (13) und die zweite Rohrbogenorientierung (R2) durch eine parallel zum Magnetfeld und senkrecht zur Längsrichtung verlaufende Messrohrachse (13) aus (siehe Fig. 4). Dieses Vorgehen wird für alle oben genannten Störungen wiederholt, wobei im letzten Schritt das Mittelpunktswinkelpaar ermittelt wird, das den kleinsten Messfehler bezüglich aller Testmessungen aufweist. Die erwünschte Genauigkeit kann nur für ganz bestimmte Kombinationen der Mittelpunktswinkel $\alpha$ und $\beta$ erreicht werden. Die bloße Optimierung der Elektrodenverteilung oder das bloße Anpassen der Polschuhe führt somit nicht zur Reduzierung der Strömungsprofilabhängigkeit bzw. des Messfehlers. Die Werte für die Mittelpunktswinkel $\alpha$ und $\beta$ werden solange angepasst, bis der resultierende Messfehler für alle Testmessungen kleiner 0,5%, bevorzugt kleiner 0,2% ist.

Basierend auf dem oben beschriebenen Optimierungsverfahren weist ein magnetisch-induktives Durchflussmessgerät mit drei Elektrodenpaaren, einem 50-DN Mittelsegment und einem Medium mit einer Durchflussgeschwindigkeit von 1 m/s einen Messfehler von 0,05% auf bei einer eingesetzten Blende (B) mit Blendenorientierung (B1) und einen Messfehler von 0,05% bei einer eingesetzten Blende (B) mit Blendenorientierung (B2).

Basierend auf dem oben beschriebenen Optimierungsverfahren weist ein magnetisch-induktives Durchflussmessgerät mit drei Elektrodenpaaren, einem 50-DN Mittelsegment und einem Medium mit einer Durchflussgeschwindigkeit von 1 m/s einen Messfehler von 0,05% auf bei einem eingesetzten 90°Rohrbogen (90°R) mit Rohrbogenorientierung (R1) und einen Messfehler von 0,5% bei einem eingesetzten 90°Rohrbogen (90°R) mit Rohrbogenorientierung (R2).

Basierend auf dem oben beschriebenen Optimierungsverfahren weist ein magnetisch-induktives Durchflussmessgerät mit drei Elektrodenpaaren, einem 300-DN Mittelsegment und einem Medium mit einer Durchflussgeschwindigkeit von 1 m/s einen Messfehler von 0,1% auf bei einer eingesetzten Blende (B) mit Blendenorientierung (B1) und einen Messfehler von 0,1% bei einer eingesetzten Blende (B) mit Blendenorientierung (B2).

Basierend auf dem oben beschriebenen Optimierungsverfahren weist ein magnetisch-induktives Durchflussmessgerät mit drei Elektrodenpaaren, einem 300-DN Mittelsegment und einem Medium mit einer Durchflussgeschwindigkeit von 1 m/s einen Messfehler von 0,1% auf bei einem eingesetzten 90°Rohrbogen (90°R) mit Rohrbogenorientierung (R1) und einen Messfehler von 0,1% bei einem eingesetzten 90°Rohrbogen (90°R) mit Rohrbogenorientierung (R2).

Basierend auf dem oben beschriebenen Optimierungsverfahren weist ein magnetisch-induktives Durchflussmessgerät mit drei Elektrodenpaaren, einem 500-DN Mittelsegment und einem Medium mit einer Durchflussgeschwindigkeit von 1 m/s einen Messfehler von 0,1% auf bei einer eingesetzten Blende (B) mit Blendenorientierung (B1) und einen Messfehler von 0,1% bei einer eingesetzten Blende (B) mit Blendenorientierung (B2).

Basierend auf dem oben beschriebenen Optimierungsverfahren weist ein magnetisch-induktives Durchflussmessgerät mit drei Elektrodenpaaren, einem 500-DN Mittelsegment und einem Medium mit einer Durchflussgeschwindigkeit von 1 m/s einen Messfehler von 0,1% auf bei einem eingesetzten 90°Rohrbogen (90°R) mit Rohrbogenorientierung (R1) und einen Messfehler von 0,1% bei einem eingesetzten 90°Rohrbogen (90°R) mit Rohrbogenorientierung (R2).

In allen obigen Simulationen geben die DN Angaben die Nennweite bzw. den Innendurchmesser des fluidführenden Kanals im Bereich des Mittelsegmentes an.

**Bezugszeichenliste**

| | |
|---|---|
| 1 | Messrohr |
| 2 | Liner |
| 3 | erste Elektrode |
| 4 | zweite Elektrode |
| 5 | Füllstandsüberwachungselektrode |
| 6 | Bezugselektrode |
| 7 | magnetfelderzeugende Vorrichtung |
| 8 | Rohr |
| 9 | Mess-, Betriebs- und/oder Auswerteeinheit |
| 10 | einlaufseitige Stirnfläche |
| 11 | auslaufseitige Stirnfläche |
| 12 | Querschnitt |
| 13 | Messrohrachse in Längsrichtung |
| 14 | Polschuh |
| 15 | Abzissenachse |
| 16 | vertikale Messrohr-Längsebene |
| 17 | Elektrodensystem |
| 18 | erste Elektrode eines Elektrodenpaares |
| 19 | zweite Elektrode eines Elektrodenpaares |
| 20 | Mittelpunkt |
| 21 | Wandung |
| 22 | Kanal |
| 23 | Wandung |
| 24 | Messsystem |
| 25 | Magnetspule |
| 26 | Elektrodensystem |
| 27 | Einlaufbereich |
| 28 | Auslaufbereich |
| 29 | Mittelsegment |
| 30 | Flansch |
| 31 | Polschuh |
| 32 | Rückführblech |
| 33 | Rohr |

34    Mess- und/oder Auswerteeinheit

35    magnetfelderzeugende Vorrichtung

37    erster Querschnitt

38    zweiter Querschnitt

40    vertikale Messrohr-Längsebene

41    Abzissenachse

42    Rohrachse

43    magnetisch-induktives Durchflussmessgerät


**Patentansprüche**

1. Verfahren zum Auslegen eines magnetisch-induktiven Durchflussmessgerätes zur Messung einer Durchflussgeschwindigkeit u oder eines Volumendurchflusses V eines Mediums, wobei das magnetisch-induktive Durchflussmessgerät umfasst:

    - ein Messrohr (1) mit erstem Querschnitt, zum Führen des Mediums in eine durch eine Messrohrachse definierte Längsrichtung (4),

        ◦ wobei das Messrohr eine einlaufseitige Stirnfläche (2) und eine auslaufseitige Stirnfläche (3) aufweist, welche das Messrohr (1) in Längsrichtung (4) abgrenzen,

        ◦ wobei das Messrohr ein Mittelsegment (29) zwischen einlaufseitiger und auslaufseitiger Stirnfläche (2, 3) aufweist, welches einen zweiten Querschnitt aufweist, wobei die erste Querschnittsfläche größer als die zweite Querschnittsfläche ist,

        ◦ wobei eine vertikale Längsebene das Messrohr in eine erste Seite und in eine zweite Seite (I, II) einteilt,

        ◦ wobei das Messrohr (1) einen fluidführenden Kanal umfasst, der eine durch einen Liner begrenzende Wandung aufweist;

    - mindestens eine magnetfelderzeugende Vorrichtung (5) zum Erzeugen eines im Wesentlichen senkrecht zur Längsrichtung (4) stehenden Magnetfeldes im Medium,

        ◦ wobei die magnetfelderzeugende Vorrichtung (5) einen Polschuh (14) oder eine Sattelspule aufweist,

        ◦ wobei der Polschuh (14) oder die Sattelspule in dem zweiten Querschnitt (9) des Messrohres (1) den fluidführenden Kanal in einem maximalen Mittelpunktswinkel β umgreift; und

    - ein Elektrodensystem (6) mit mindestens zwei Elektrodenpaaren, die dazu eingerichtet sind, eine senkrecht zum Magnetfeld und zur Längsrichtung (4) induzierte Spannung zwischen den Elektrodenpaaren zu erfassen;

        ◦ wobei sich jeweils eine erste Elektrode (6.1) des Elektrodenpaares auf der ersten Seite (I) des Messrohres befindet,

        ◦ wobei sich jeweils eine zweite Elektrode (6.2) des Elektrodenpaares auf der zweiten Seite (II) befindet,

        ◦ wobei ein Mittelpunktswinkel $\alpha$ in dem zweiten Querschnitt (9) des Messrohres einen minimalen Kreissektor aufschlägt, in dem sich die auf jeweils einer Seite des Messrohres (1) befindlichen Elektroden (6.1, 6.2) verteilen,

        ◦ wobei die Elektrodenpaare im Mittelsegment angeordnet sind;

umfassend die Verfahrensschritte:

    - Abstimmen der Mittelpunktswinkel $\alpha$ und $\beta$ so aufeinander, dass das magnetisch-induktive Durchflussmessgerät in dem Maße unempfindlich gegenüber Abweichungen einer rotationsunsymmetrischen Strömung, dass das magnetisch-induktive Durchflussmessgerät bei einer Testmessung einen Messfehler der Durchflussgeschwindigkeit $\Delta_u = \left|\frac{u_{va}-u_S}{u_{va}}\right|$ und/oder einen Messfehler des Volumendurchflusses $\Delta_{\dot{V}} = \left|\frac{\dot{V}_{va}-\dot{V}_S}{\dot{V}_{va}}\right|$ kleiner 1,0% aufweist, wobei das Abstimmen der Mittelpunktswinkel $\alpha$ und $\beta$ das Durchführen der Testmessung umfasst, umfassend die Verfahrensschritte:

        - Bestimmen der Durchflussgeschwindigkeit $u_{va}$ und/oder ein Volumendurchfluss $\dot{V}_{va}$ im Falle einer Strömung mit voll ausgebildeten Strömungsprofil; und

        - Bestimmen der Durchflussgeschwindigkeit $u_{va}$ und/oder ein Volumendurchfluss $\dot{V}_{va}$ im Falle einer rotationsunsymmetrischen Strömung,

wobei die rotationsunsymmetrischen Strömung durch eine an die einlaufseitige Stirnfläche eingerichtete und mindestens eine Störquelle umfassende Störung erzeugt wird.

2. Verfahren nach Anspruch 1,

    wobei die Störquelle eine Blende (B) oder einen 90°Rohrbogen (90°R) umfasst,

    wobei durch die Blende (B) 50% des Querschnitts des Messrohres (1) abgedeckt wird,

    wobei die Blende (B) eine Kreissehne aufweist, welche die Blende zum Rohr hin begrenzt,

    wobei die Blende (B) eine erste Blendenorientierung (B1) oder eine zweite Blendenorientierung (B2) annimmt,
wobei bei der ersten Blendenorientierung (B1) die Kreissehne senkrecht zum Magnetfeld orientiert ist und bei der zweiten Blendenorientierung (B2) die Kreissehne parallel zum Magnetfeld orientiert ist,
wobei der 90°Rohrbogen (90°R) eine erste Rohrbogenorientierung (R1) oder eine zweite Rohrbogenorientierung (R2) annimmt,
wobei sich die erste Rohrbogenorientierung (R1) durch eine senkrecht zum Magnetfeld und zur Längsrichtung (4) des Messrohres (1) verlaufende Rohrachse (42) auszeichnet und die zweite Rohrbogenorientierung (R2) durch eine parallel zum Magnetfeld und senkrecht zur Längsrichtung (4) des Messrohres (1) verlaufende Rohrachse (42) auszeichnet.

3. Verfahren nach Anspruch 1 oder 2,
wobei die Störung mit Abstand 0-DN zur einlaufseitigen Stirnfläche (2) eingerichtet wird.

4. Verfahren nach mindestens einem der Ansprüche 1 bis 3,

wobei für den Mittelpunktswinkel $\alpha$ gilt, dass 30° $\leq \alpha \leq$ 60° ist und insbesondere, dass 40° $\leq \alpha \leq$ 50° ist,
wobei für den Mittelpunktswinkel $\beta$ gilt, dass 50° $\leq \beta \leq$ 90° ist und insbesondere, dass 70° $\leq \beta \leq$ 80° ist.

5. Verfahren nach mindestens einem der Ansprüche 1 bis 4,
wobei mindestens zwei Elektroden, insbesondere alle auf jeweils einer Seite des Messrohres bezüglich der vertikalen Messrohr-Längsebene (7) befindlichen Elektroden, insbesondere mit einem Stanzbiegeteil, kurzgeschlossen sind.

**Claims**

1. Procedure for designing an electromagnetic flowmeter for measuring a flow velocity $u$ or a volume flow $V$ of a medium, said electromagnetic flowmeter comprising:

- a measuring tube (1) with a first cross-section, wherein said tube is designed to conduct the medium in a longitudinal direction (4) defined by a measuring tube axis,

  ∘ wherein the measuring tube has a face (2) on the inlet side and a face (3) on the outlet side that delimit the measuring tube (1) in the longitudinal direction (4),
  ∘ wherein the measuring tube has a central segment (29) between the face on the inlet side and the face on the outlet side (2, 3), wherein said segment has a second cross-section, wherein the first cross-section area is greater than the second cross-section area,
  ∘ wherein a vertical longitudinal plane divides the measuring tube into a first side and a second side (I, II),
  ∘ wherein the measuring tube (1) has a fluid-carrying channel that has a wall delimited by a liner;

- at least a unit to generate magnetic fields (5) which is designed to generate a magnetic field in the medium that is essentially perpendicular to the longitudinal direction (4),

  ∘ wherein the unit to generate magnetic fields (5) has a pole piece (14) or a saddle coil,
  ∘ wherein the pole piece (14) or the saddle coil surrounds the fluid-carrying channel in the second cross-section (9) of the measuring tube (1) in a maximum center angle $\beta$; and

- an electrode system (6) with at least two electrode pairs, which are designed to measure a voltage induced perpendicularly to the magnetic field and to the longitudinal direction (4) between the electrode pairs;

  ∘ wherein a first electrode (6.1) of the pair of electrodes is located, in each case, on the first side (I) of the measuring tube,
  ∘ wherein a second electrode (6.2) of the pair of electrodes is located on the second side (II),
  ∘ wherein, in the second cross-section (9) of the measuring tube, a center angle $\alpha$ forms a minimum circular sector in which the electrodes (6.1, 6.2) located on one side of the measuring tube (1) are distributed,
  ∘ wherein the electrode pairs are arranged in the central segment;

wherein said procedure comprises the following steps:

- Adjustment of the center angles $\alpha$ and $\beta$ in relation to one another in such a way that the electromagnetic flowmeter is insensitive to deviations of a rotationally asymmetric flow to the extent that, during a test measurement, the electromagnetic flowmeter has a measured error of

$$\Delta_u = \left|\frac{u_{va}-u_S}{u_{va}}\right|$$

the flow velocity and/or a measured error of the volume flow

$$\Delta_{\dot{V}} = \left|\frac{\dot{V}_{va}-\dot{V}_S}{\dot{V}_{va}}\right|$$ less than 1.0 %,

wherein the adjustment of the center angles $\alpha$ and $\beta$ comprises the performance of the test measurement, comprising the following procedural steps:

- Determination of the flow velocity $u_{va}$ and/or a volume flow $V_{va}$ in the event of a flow with a fully developed flow profile; and
- Determination of the flow velocity $u_{va}$ and/or a volume flow $V_{va}$ in the event of a rotationally asymmetric flow,

wherein the rotationally asymmetric flow is generated by a disturbance installed on the face on the inlet side and comprising at least a source of disturbance.

2. Procedure as claimed in Claim 1,

wherein the source of disturbance comprises an orifice plate (B) or a 90° tube elbow (90°R), wherein 50% of the cross-section of the measuring tube (1) is covered by the orifice plate (B), wherein the orifice plate (B) has a circle chord which limits the orifice plate towards the tube, wherein the orifice plate (B) has a first orifice plate orientation (B1) or a second orifice plate orientation (B2), wherein the circle chord is oriented to be perpendicular to the magnetic field in the case of the first orifice plate orientation (B1) and the circle chord is oriented to be parallel to the magnetic field in the case of the second orifice plate orientation (B2), wherein the 90° tube elbow (90°R) adopts a first tube elbow orientation (R1) or a second tube elbow orientation (R2), wherein the first tube elbow orientation (R1) is **characterized by** a tube axis (42) that is perpendicular to the magnetic field and to the longitudinal direction (4) of the measuring tube (1) and wherein the second tube elbow orientation (R2) is **characterized by** a tube axis (42) that is parallel to the magnetic field and perpendicular to the longitudinal direction of the measuring tube (1).

3. Procedure as claimed in Claim 1 or 2, wherein the disturbance is established at a distance of 0-DN in relation to the face (2) on the inlet side.

4. Procedure as claimed in at least one of the Claims 1 to 3,

wherein the rule $30° \leq \alpha \leq 60°$, and particularly $40° \leq \alpha \leq 50°$, applies for the center angle $\alpha$, wherein the rule $50° \leq \beta \leq 90°$, and particularly $70° \leq \beta \leq 80°$, applies for the center angle $\beta$.

5. Procedure as claimed in at least one of the Claims 1 to 4, wherein at least two electrodes, particularly all the electrodes located, in each case, on one side of the measuring tube in relation to the vertical longitudinal plane (7) of the measuring tube, are short-circuited, particularly with a stamped bent part.

**Revendications**

1. Procédé destiné à la conception d'un débitmètre électromagnétique pour la mesure d'une vitesse d'écoulement *u* ou d'un débit volumique *V* d'un produit, le débitmètre électromagnétique comprenant :

- un tube de mesure (1) avec une première section transversale, lequel tube est destiné à guider le produit dans une direction longitudinale (4) définie par un axe de tube de mesure,

○ le tube de mesure présentant une surface frontale (2) côté entrée et une surface frontale (3) côté sortie, lesquelles délimitent le tube de mesure (1) dans la direction longitudinale (4),
○ le tube de mesure présentant un segment central (29) entre la surface frontale côté entrée et la surface frontale côté sortie (2, 3), lequel segment présente une deuxième section transversale, la première surface de section transversale étant supérieure à la deuxième surface de section transversale,
○ un plan longitudinal vertical divisant le tube de mesure en un premier côté et en un deuxième côté (I, II),
○ le tube de mesure (1) comprenant un canal de guidage du produit qui présente une paroi délimitée par un liner ;

- au moins un dispositif générateur de champ magnétique (5) destiné à générer dans le produit un champ magnétique pour l'essentiel perpendiculaire à la direction longitudinale (4),

○ le dispositif générateur de champ magnétique (5) présentant une pièce polaire (14) ou une bobine en forme de selle,
○ la pièce polaire (14) ou la bobine en forme de selle entourant le canal de guidage du produit dans la deuxième section transversale (9) du tube de mesure (1) selon un angle maximal au centre β ; et

- un système d'électrodes (6) avec au moins deux paires d'électrodes, lesquelles sont conçues pour mesurer une tension induite perpendiculairement au champ magnétique et à la direction longitudinale (4) entre les paires d'électrodes ;

  ○ une première électrode (6.1) de la paire d'électrodes se trouvant respectivement sur le premier côté (I) du tube de mesure,
  ○ une deuxième électrode (6.2) de la paire d'électrodes se trouvant sur le deuxième côté (II),
  ○ un angle au centre α formant dans la deuxième section (9) du tube de mesure un secteur circulaire minimal dans lequel se répartissent les électrodes (6.1, 6.2) se trouvant respectivement sur un côté du tube de mesure (1),
  ○ les paires d'électrodes étant disposées dans le segment central ;

lequel procédé comprend les étapes suivantes :

- Ajustement des angles au centre α et β l'un par rapport à l'autre, de telle sorte que le débitmètre électromagnétique soit insensible aux déviations d'un écoulement asymétrique en rotation, de telle sorte que le débitmètre électromagnétique, lors d'une mesure de test, présente un écart de mesure de la vitesse d'écoulement

$$\Delta_u = \left| \frac{u_{va} - u_S}{u_{va}} \right|$$

et/ou un écart de mesure

$$\Delta_{\dot{V}} = \left| \frac{\dot{V}_{va} - \dot{V}_S}{\dot{V}_{va}} \right|$$

du débit volumique inférieur à 1,0 %, l'ajustement des angles au centre α et β comprenant la réalisation de la mesure de test, laquelle comprend les étapes de procédé suivantes :
- Détermination de la vitesse d'écoulement $u_{va}$ et/ou d'un débit volumique $V_{va}$ dans le cas d'un écoulement avec un profil d'écoulement entièrement formé ; et
- Détermination de la vitesse d'écoulement $u_{va}$ et/ou d'un débit volumique $V_{va}$ dans le cas d'un écoulement à asymétrie de rotation,

l'écoulement asymétrique en rotation étant généré par une perturbation installée sur la surface frontale côté entrée et comprenant au moins une source de perturbation.

2. Procédé selon la revendication 1,

   pour lequel la source de perturbation comprend un diaphragme (B) ou un coude de tube à 90° (90°R), 50 % de la section transversale du tube de mesure (1) étant couverts par le diaphragme (B),
   le diaphragme (B) présentant une corde de cercle qui limite le diaphragme vers le tube, le diaphragme (B) adoptant une première orientation de diaphragme (B1) ou une deuxième orientation de diaphragme (B2),
   la corde de cercle étant orientée perpendiculairement au champ magnétique pour la première orientation de diaphragme (B1) et la corde de cercle étant orientée parallèlement au champ magnétique pour la deuxième orientation de diaphragme (B2),
   le coude de tube à 90° (90°R) adoptant une première orientation de coude de tube (R1) ou une deuxième orientation de coude de tube (R2),
   la première orientation d'arc de tube (R1) étant **caractérisée par** un axe de tube (42) s'étendant perpendiculairement au champ magnétique et à la direction longitudinale (4) du tube de mesure (1) et la deuxième orientation d'arc de tube (R2) étant **caractérisée par** un axe de tube (42) s'étendant parallèlement au champ magnétique et perpendiculairement à la direction longitudinale du tube de mesure (1).

3. Procédé selon la revendication 1 ou 2, pour lequel la perturbation est réalisée à une distance 0-DN par rapport à la surface frontale (2) côté entrée.

4. Procédé selon au moins l'une des revendications 1 à 3,

   pour lequel, pour l'angle au centre α, la règle 30° ≤ α ≤ 60°, et notamment 40° ≤ α ≤ 50°, s'applique,
   pour lequel, pour l'angle au centre β, la règle 50° ≤ β ≤ 90°, et notamment 70° ≤ β ≤ 80°, s'applique.

5. Procédé selon au moins l'une des revendications 1 à 4,
   pour lequel au moins deux électrodes, notamment toutes les électrodes situées chacune d'un côté du tube de mesure par rapport au plan longitudinal vertical (7) du tube de mesure, sont court-circuitées, notamment avec une pièce découpée et pliée.

Fig. 1

Fig. 2

Fig. 3

Fig.4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 101294832 A
- DE 102015113390 A1
- EP 0878694 A1
- WO 2004031699 A2